# EUROPEAN PATENT APPLICATION

(11) **EP 4 318 739 A1**
(43) Date of publication of application: **07.02.2024**
(21) Application number: 23792100.2
(22) Date of filing: 13.04.2023
(51) Int. Cl.: H01M 10/659, H01M 10/6569, H01M 10/613, H01M 10/647, H01M 50/143, H01M 50/24, H01M 50/342, H01M 50/383, H01M 50/211, H01M 50/105

(54) **BATTERY PACK**

(30) Priority: 18.04.2022 KR 20220047695; 26.12.2022 KR 20220183986
(71) Applicant: LG ENERGY SOLUTION, LTD., Seoul 07335 (KR)
(72) Inventor: LEE, Yong Ho, Daejeon 34122 (KR); LEE, Jin Kyu, Daejeon 34122 (KR); HWANG, Won Pill, Daejeon 34122 (KR); YOON, Doo Han, Daejeon 34122 (KR); SON, Chang Keun, Daejeon 34122 (KR)
(74) Representative: Plasseraud IP
(86) International application number: PCT/KR2023/004989
(87) International publication number: WO 2023/204523

(57) **Abstract**

The disclosed technology relates to a battery pack. In an example, the battery pack includes a pack case, a plurality of batteries accommodated in the pack case, a first heat absorber disposed between the plurality of batteries, and a second heat absorber disposed on each of two side surfaces of each of the plurality of batteries, wherein the first heat absorber and the second heat absorber each include an absorbent material impregnated with a liquid vaporized by heat generated from the battery, and an exterior material in which the absorbent material in a liquid-absorbed state is accommodated.

## Description

### [Technical Field]

The present invention relates to a battery pack capable of suppressing a thermal propagation phenomenon in which other nearby secondary batteries are consecutively overheated when thermal runaway occurs.

This application claims the benefit of priority based on Korean Patent Application No. 10-2022-00247695, filed on April 18, 2022, and Korean Patent Application No. 10-2022-0183986, filed on December 26, 2022, and the entire contents of the Korean patent applications are incorporated herein by reference.

### [Background Technology of the Invention]

Secondary batteries are rechargeable unlike primary batteries, and are being researched and developed a lot due to their compact size and high capacity potential. The demand for secondary batteries as energy sources is increasing more rapidly due to technology development and an increase in demand for mobile devices and also due to electric vehicles and energy storage systems that are emerging in line with the needs of the times for environmental protection.

Secondary batteries are classified into coin type batteries, cylindrical type batteries, prismatic type batteries, and pouch type batteries according to the shape of a battery case. In such a secondary battery, an electrode assembly mounted in a battery case is a chargeable or dischargeable power generating device having a structure in which an electrode and a separator are stacked.

Since secondary batteries are required to be continuously used for a long time, it is necessary to effectively control the heat generated during a charging or discharging process. When the cooling of secondary batteries is not smoothly performed, a positive feedback chain reaction, in which an increase in temperature causes an increase in current, and the increase in current causes the temperature to rise again, occurs, eventually leading to a catastrophic state of thermal runaway.

Also, when secondary batteries are grouped in the form of a module or a pack, a thermal propagation phenomenon occurs in which other nearby secondary batteries are consecutively overheated due to thermal runaway occurring in one secondary battery. Furthermore, since there is a high risk of fire due to ignition sources such as a combustible gas ejected from an overheated secondary battery and a heating electrode, it is necessary to suppress such risk of ignition.

### [Related Art Documents]

(Patent Document 001) Korean Patent Publication No. 10-2021-0077410 (published on June 25, 2021)

### [Description of the Invention]

### [Technical Problem]

An object of the present invention is to provide a battery pack capable of effectively suppressing and preventing a thermal propagation phenomenon in which heat due to thermal runaway generated in a secondary battery propagates to nearby secondary batteries.

However, the technical objects to be solved by the present invention are not limited to the above-described object, and other objects not described herein will be clearly understood by those skilled in the art from the following descriptions of the present invention.

### [Technical Solution]

According to the present invention, there is provided is a battery pack including a pack case, a plurality of batteries accommodated in the pack case, a first heat absorber disposed between the plurality of batteries, and a second heat absorber disposed on each of two side surfaces of each of the plurality of batteries, wherein the first heat absorber and the second heat absorber each include an absorbent material impregnated with a liquid vaporized by heat generated from the battery, and an exterior material in which the absorbent material in a liquid-absorbed state is accommodated.

The first heat absorber may be disposed between every adjacent batteries among the plurality of batteries.

The exterior material of each of the first heat absorber and the second heat absorber may be a pouch, and the pouch may be provided with a fragile portion that preferentially fractures when the liquid impregnated in the absorbent material vaporizes and an internal pressure thereof increases.

The absorbent material may be a super absorbent matrix. For example, the super absorbent matrix may include a super absorbent polymer (SAP) or a super absorbent fiber (SAF).

The liquid may be water mixed with an additive, and the additive may be a material for lowering the surface tension of water or a fire extinguishing agent.

The battery may include a venting device, and the fragile portion provided in the pouch of the first heat absorber may be disposed at a position corresponding to the venting device.

The second heat absorber may be disposed on an inner surface of a side case of the pack case.

The second heat absorber may be provided as a plurality of second heat absorbers, and the plurality of second heat absorbers may be uniformly disposed on the inner surface of the side case to form rows and columns.

The plurality of batteries may be accommodated in the pack case to form a plurality of columns, a side plate may be disposed between the columns of the batteries, and the second heat absorber may be provided as a plurality of second heat absorbers so that the second heat absorbers are uniformly disposed in contact with side surfaces of the batteries on an inner surface of the side plate to form rows and columns.

A rib structure having a grid shape may be provided on the inner surface of the side case or the inner surface of the side plate, the second heat absorbers may be disposed in concave surfaces formed to form rows and columns due to the rib structure, and the second heat absorber may not protrude out of the concave surface.

The plurality of batteries may be accommodated in the pack case to form one or more columns, a venting device may be provided on an upper surface of each battery, and a venting guide may be provided to be integrally coupled to the venting devices of the batteries forming the columns.

The venting guide may separate the venting device from an electrode terminal disposed on the upper surface of the battery.

The exterior material of the first heat absorber may be a pouch, and the pouch of the first heat absorber may be provided with a fragile portion that preferentially fractures when the liquid impregnated in the absorbent material vaporizes and an internal pressure thereof increases. Thus, the fragile portion of the first heat absorber may be positioned in a direction toward the venting guide. The venting guide may include gas outlets communicating with the venting devices, and a steam outlet communicating with the fragile portion of the first heat absorber.

The first heat absorber may be disposed between every adjacent batteries among the plurality of batteries, and the steam outlet may be provided between every adjacent outlets among the gas outlets.

### [Advantageous Effects]

According to a battery pack of the present invention having such a configuration, heat is rapidly absorbed and dispersed in an environment in which a temperature rapidly rises as in normal rapid charging, thereby suppressing the occurrence of thermal runaway in advance and maintaining performance and lifetime without a large increase in temperature.

According to the present invention, when a thermal runaway phenomenon occurs in any one secondary battery, a liquid impregnated in an absorbent material in a heat absorbing pouch absorbs heat and vaporizes. When the vaporized gas rises above a certain pressure, the gas fractures the heat absorbing pouch and is ejected to cool ignition sources such as an inflammable gas ejected from an overheated battery and a heating electrode and suppress flames, thereby considerably reducing a thermal propagation phenomenon with respect to nearby secondary batteries and the risk of fire.

In addition, a battery pack of the present invention has functions of absorbing heat, insulating heat, and extinguishing fires between and on side surfaces of densely packed secondary batteries, thereby rapidly dispersing the excess energy of the secondary batteries in all directions to delay a trigger time for thermal runaway.

However, the technical effects obtainable through the present invention are not limited to the above-described effects, and other effects not described herein will be clearly understood by those skilled in the art from the following descriptions of the present invention.

### [Brief Description of the Drawings]

The accompanying drawings illustrate exemplary embodiments of the present invention and, together with the detailed description of the present invention, serve to provide further understanding of the technical spirit of the present invention. However, the present invention is not to be construed as being limited to the drawings.
FIG. 1 is an exploded perspective view of a battery pack according to a first embodiment of the present invention.
FIG. 2 is a view illustrating an arrangement structure of first and second heat absorbers provided in the battery pack of the present invention.
FIG. 3 is a view illustrating an arrangement structure of the first and second heat absorbers for one battery.
FIG. 4 is a cross-sectional view illustrating an arrangement structure of a plurality of batteries and first heat absorbers.
FIG. 5 is a cross-sectional view illustrating an arrangement structure of the plurality of batteries and second heat absorbers.
FIG. 6 is an exploded perspective view of a battery pack according to a second embodiment of the present invention.
FIG. 7 is a view illustrating a coupling structure of a venting guide for a plurality of batteries.
FIG. 8 is a cross-sectional view illustrating the coupling structure along cutting line A-A' of FIG. 7.

### [Best Mode for Carrying Out the Invention]

Since the present invention may be variously changed and have various embodiments, specific embodiments will be described in detail below.

However, it should be understood that there is no intention to limit the present invention to particular embodiments, and on the contrary, the present invention is to cover all modifications, equivalents, and alternatives falling within the spirit and scope of the present invention.

In this application, it should be understood that terms such as "include" and "have" are intended to indicate that there is a feature, number, step, operation, component, part, or a combination thereof described in the specification, and they do not exclude in advance the possibility of the presence or addition of one or more other features or numbers, steps, operations, components, parts or combinations thereof.

Also, when a first portion such as a layer, a film, an area, a plate, etc. is referred to as being "on" a second portion, this includes not only the case where the first portion is "directly on" the second portion, but also the case where still a third portion is interposed therebetween. On the other hand, when a first portion such as a layer, a film, an area, a plate, etc. is referred to as being "under" a second portion, this includes not only the case where the first portion is "directly under" the second portion, but also the case where a third portion is interposed therebetween. In addition, to be disposed "on" in the present application may include the case of being disposed at the bottom as well as the top.

The present invention relates to a battery pack. In an example, the battery pack includes a pack case, a plurality of batteries accommodated in the pack case, a first heat absorber disposed between the plurality of batteries, and a second heat absorber disposed on each of two side surfaces of each of the plurality of batteries.

Here, the first heat absorber and the second heat absorber each include an absorbent material impregnated with a liquid vaporized by heat generated from the battery, and an exterior material in which the absorbent material in a liquid-absorbed state is accommodated.

Therefore, according to the present invention, through a heat absorbing action of the first and second heat absorbers in contact with the battery, heat is rapidly absorbed and dispersed in an environment in which a temperature rapidly rises as in normal rapid charging, thereby suppressing the occurrence of thermal runaway and maintaining performance and lifetime without a large increase in temperature. In particular, the first and second heat absorbers can absorb heat in all directions of the battery by coming in contact with the front and rear surfaces and both side surfaces of the battery, thereby effectively suppressing an increase in temperature.

In addition, according to the present invention, when a thermal runaway phenomenon occurs in any one battery in the battery pack, a liquid impregnated in the absorbent material in the heat absorber absorbs heat and vaporizes. When the vaporized gas rises above a certain pressure, the gas fractures the heat absorber and is ejected to cool ignition sources such as an inflammable gas ejected from an overheated battery and a heating electrode and suppress flames, thereby considerably reducing the risk of fire in the battery pack.

### [Modes for Carrying Out the Invention]

Hereinafter, specific embodiments of a battery pack of the present invention will be described with reference to the accompanying drawings. For reference, front and rear directions or up, down, left, and right directions for designating relative positions used in the following description are intended to help the understanding of the present invention and are based on directions shown in the drawings unless otherwise specified.

### [First embodiment]

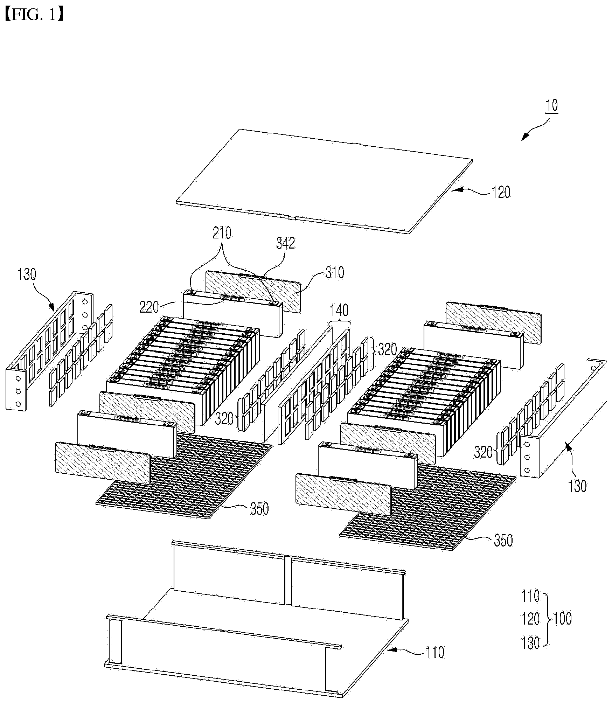

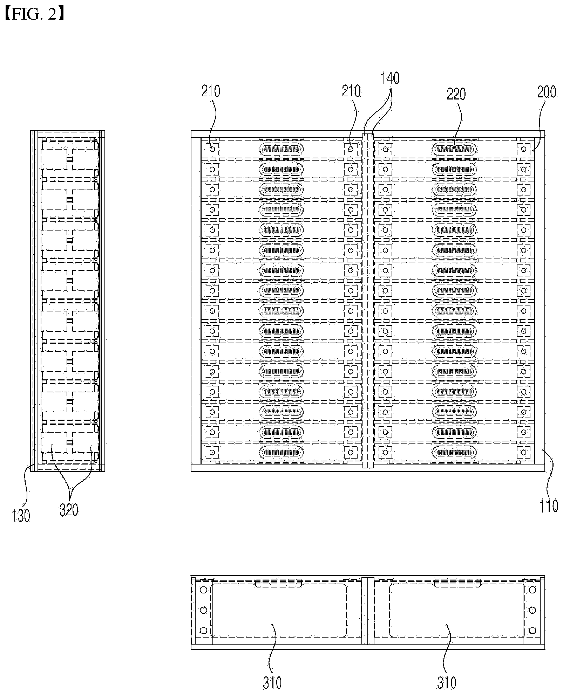

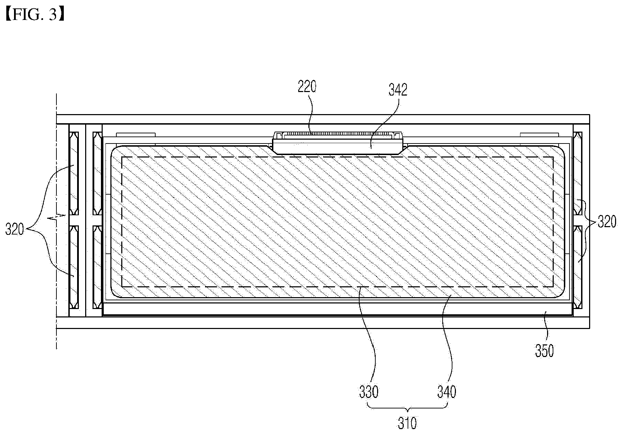

FIG. 1 is an exploded perspective view of a battery pack 10 according to a first embodiment of the present invention. FIG. 2 is a view illustrating an arrangement structure of first and second heat absorbers 310 and 320 provided in the battery pack 10 of the present invention. FIG. 3 is a view illustrating an arrangement structure of the first and second heat absorbers 310 and 320 for one battery 200.

As shown in the drawings, the battery pack 10 of the present invention includes a pack case 100 and a plurality of batteries 200 accommodated in the pack case 100. The illustrated pack case 100 includes a main case 110 having a "U" cross-sectional shape, an upper case 120 coupled to an open surface of the main case 110, and a pair of side cases 130. The battery 200 is a secondary battery having a prismatic case shape, and a unidirectional secondary battery in which positive and negative electrode terminals 210 are disposed together on an upper surface is shown. In addition, a venting device 220 for discharging excessive internal pressure is provided between the electrode terminals 210 on an upper surface of the battery 200.

The battery pack 10 of the present invention includes two types of heat absorbers 310 and 320. The first heat absorber 310 is a heat absorber disposed between the plurality of batteries 200. That is, in the illustrated embodiment, the plurality of batteries 200 are arranged in a line in a thickness direction, and thus the first heat absorbers 310 are in contact with the front and rear surfaces of the battery 200. The second heat absorbers 320 are heat absorbers disposed on both side surfaces of each of the plurality of batteries 200. Accordingly, the four (front, rear, left, and right) surfaces of the battery 200 accommodated in the pack case 100 are surrounded by the heat absorbers 310 and 320.

The first and second heat absorbers 310 and 320 in contact with the battery 200 each include an absorbent material 330 impregnated with a liquid vaporized by absorbing heat generated by the battery 200, and an exterior material 340 for sealing and accommodating the absorbent material 330 in a liquid-absorbed state.

The first and second heat absorbers 310 and 320 primarily perform a heat insulating function of suppressing the heat transfer between adjacent batteries 200. The first and second heat absorbers 310 and 320 secondarily perform a heat absorbing function of absorbing the heat generated in the battery 200 to prevent overheating. In addition, as a liquid vaporizes through a heat absorbing action, the internal pressure (vapor pressure) of the exterior material 340 rises. When the internal pressure exceeds a certain pressure, the exterior material 340 fractures and gas is ejected, thereby lowering the temperature of a high-temperature gas and the temperature of flames generated from the nearby overheated batteries 200. Accordingly, the first and second heat absorbers 310 and 320 may finally perform a fire extinguishing function.

In one embodiment of the present invention, the absorbent material 330 may be an absorbent material including a super absorbent matrix, for example, a super absorbent polymer (SAP) or a super absorbent fiber (SAF). The super absorbent matrix is porous or fibrous and exhibits a capillary action, and thus it is possible to absorb a large amount of liquid, and SAFs may be made into a fiber form, such as a nonwoven fabric, by processing SAPs.

In the present invention, specific types of the SAP and the SAF produced therefrom are not particularly limited, and any material having an excellent ability to absorb a fluid, particularly, water, may be used without limitation. Examples of the SAP may include at least one selected from the group consisting of polyacrylic acid, a polyacrylic salt, a polyacrylate graft polymer, starch, crosslinked carboxymethylated cellulose, an acrylic acid copolymer, a hydrolyzed starch-acrylonitrile graft copolymer, a starch-acrylic acid graft copolymer, a saponified vinyl acetate-acrylic acid ester copolymer, a hydrolyzed acrylonitrile copolymer, a hydrolyzed acrylamide copolymer, an ethylene-maleic anhydride copolymer, an isobutylene-maleic anhydride copolymer, polyvinylsulfonic acid, polyvinylphosphonic acid, polyvinyl phosphoric acid, polyvinyl sulfuric acid, sulfonated polystyrene, polyvinylamine, polydialkylaminoalkyl(meth)acrylamide, polyethyleneimine, polyallylamine, polyallylguanidine, polydimethyldiallylammonium hydroxide, a quaternized polystyrene derivative, guanidine-modified polystyrene, quaternized poly((meth)acrylamide, oolyvinylguanidine, and a mixture thereof and may preferably include at least one selected from the group consisting of a crosslinked polyacrylic salt, crosslinked polyacrylic acid, and a crosslinked acrylic acid copolymer, but the present invention is not limited thereto.

The type of acrylic acid copolymer used as the SAP in the present invention is not particularly limited, but preferably, the acrylic acid copolymer may be a copolymer including at least one comonomer selected from the group consisting of an acrylic acid monomer, maleic acid, itaconic acid, acrylamide, 2-acrylamide-2-methylpropanesulfonic acid, 2-(meth)acryloylethanesulfonic acid, 2-hydroxyethyl(meth)acrylate, and styrenesulfonic acid.

In the present invention, the amount of water absorbed by the SAP may be in a range of 10 g/g to 500 g/g and preferably 50 g/g to 200 g/g, but the present invention is not limited thereto. That is, 10 g to 500 g of water, preferably, 50 g to 200 g, may be absorbed per 1 g of the SAP.

In the present invention, the duration of a cooling effect may be improved as the amount of water absorbed by the SAP is increased. However, when the amount of water absorbed by the SAP exceeds 500 g/g, since the fluidity of the SAP increases, it may be difficult to maintain a shape of the SAP, which makes effective cooling impossible, and when the amount of water absorbed by the SAP is less than 10 g/g, the duration of a cooling effect is too short, which makes it ineffective.

In one embodiment of the present invention, the liquid impregnated in the absorbent material 330 may be water. Water is a material with the highest specific heat and latent heat among readily available liquids. Therefore, since the water contained in the absorbent material 330 absorbs a lot of heat during a process in which a temperature rises to the boiling point to cause a phase change to gas, water is suitable for application as a liquid accommodated in the first and second heat absorbers 310 and 320 of the present invention.

In addition, an additive capable of enhancing a fire extinguishing function may be mixed with the water impregnated in the absorbent material 330. For example, the additive mixed with water may be a material for lowering the surface tension of water or may be a fire extinguishing agent. Examples of the material for lowering the surface tension of water may include a wetting agent or a surfactant. When the surface tension of water is reduced, the penetration effect of water increases, thereby enhancing the fire extinguishing effect on high-temperature ignition sources such as heating electrodes and ignition particles.

A fire extinguishing agent is a generic name for agents themselves that exert a fire extinguishing function, and various currently commercialized powder fire extinguishing agents or liquid fire extinguishing agents may be widely applied. For example, a fire extinguishing agent under the brand name F-500 EA (manufactured by Hazard Control Technologies, Inc.) may be added to water.

Meanwhile, a large amount of liquid impregnated in the absorbent material 330, for example, water, absorbs heat generated from the battery 200 and then vaporizes when a temperature thereof exceeds a boiling point. Due to an increase in volume due to a phase change from liquid to gas, the internal pressure of the exterior material 340 that seals the absorbent material 330 increases.

A pouch made of a flexible laminate sheet may be used as the exterior material 340. The pouch, which is the exterior material 340, is provided with a fragile portion 342 that preferentially fractures when the liquid impregnated in the absorbent material 330 vaporizes and the internal pressure increases.

The laminate sheet may have a structure of three or more layers including an aluminum thin film layer, an inner resin layer formed inside the aluminum thin film layer, and an outer resin layer formed outside the aluminum thin film layer. For example, the inner resin layer may be made of casted polypropylene (CPP) or polypropylene (PP), and the outer resin layer may be made of polyethylene terephthalate (PET) or nylon.

By locally lowering the sealing strength of the pouch 340, the fragile portion 342 may be formed in a structure that preferentially fractures due to an increase in internal pressure due to vaporization of the liquid. That is, the pouch 340 may be sealed by heat-sealing edges of the laminate sheet surrounding the absorbent material 330, and the fragile portion 342 may be formed in such a way that its heat-sealing strength is lower than that of surrounding portions. For example, the fragile portion 342 may be formed by making the thickness thereof thinner than the surrounding portions, reducing strength by forming a notch, or locally removing the aluminum thin film layer for maintaining durability.

As shown in FIGS. 1 and 2, the first heat absorber 310 may be disposed between the plurality of batteries 200. In addition, the first heat absorber 310 may also be provided between a sidewall of the pack case 100 and the battery 200. As described above, the first heat absorbers 310 are provided on the front and rear surfaces of all the batteries 200, thereby achieving uniform heat insulating, cooling, and fire extinguishing actions inside the battery pack 10.

Meanwhile, as described above, the battery 200 includes the venting device 220, and the fragile portion 342 provided in the pouch 340 of the first heat absorber 310 may be preferably positioned at a position corresponding to the venting device 220. In the illustrated embodiment, the venting device 220 is disposed at the center of the upper surface of the battery 200, and correspondingly, the fragile portion 342 is positioned at the center of an upper portion of the first heat absorber 310.

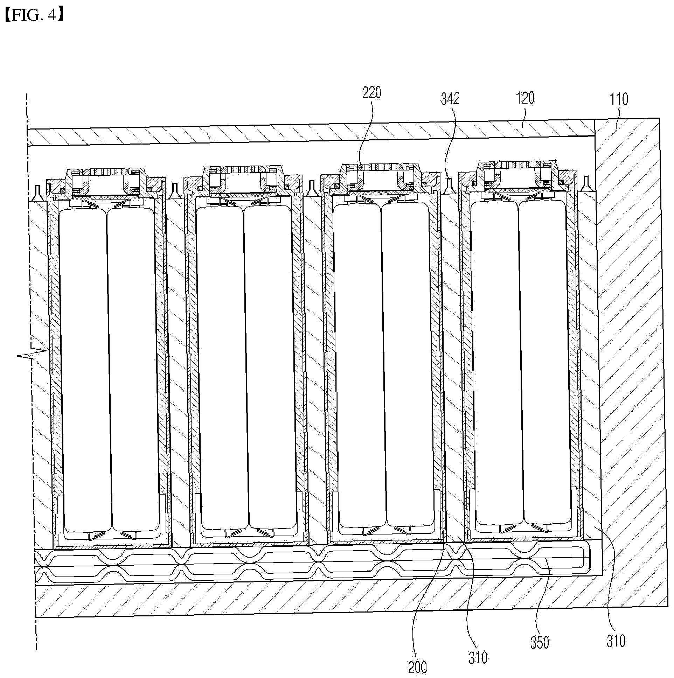

FIG. 4 is a cross-sectional view illustrating an arrangement structure of the plurality of batteries 200 and the first heat absorbers 310. As described above, since the first heat absorber 310 is provided with the fragile portion 342, as shown in FIG. 4, in a case in which a thermal runaway phenomenon occurs in any one battery 200 and the battery 200 overheats, when a liquid impregnated in the absorbent material 330 in the first heat absorber 310 absorbs heat and vaporizes, and the vaporized gas rises above a certain pressure, the fragile portion 342 of the first heat absorber 310 fractures, and gas is ejected. During a process in which ignition sources such as a combustible gas generated by the overheated battery 200 and a heating electrode are released through the venting device 220, the gas ejected from the first heat absorber 310 cools the ignition sources and suppresses and extinguishes flames to considerably reduce the risk of fire in the battery pack 10.

In the above, the first heat absorber 310 has been described in detail, but the configuration of the heat absorber itself is substantially the same as that of the second heat absorber 320. However, the second heat absorber 320 is different from the first heat absorber 310 in that the second heat absorber 320 is disposed on each of two side surfaces of the battery 200 and the position of the fragile portion 342 does not require a special condition.

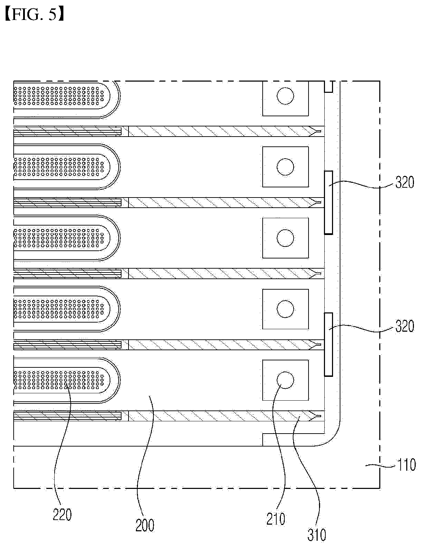

The second heat absorber 320 is in contact with each of two side surfaces of the battery 200 and is disposed on an inner surface of the side case 130 due to a structure of the pack case 100. FIG. 5 is a view illustrating an arrangement structure of the plurality of batteries 200 and the second heat absorbers 320. Referring to FIGS. 1 and 3 together, when a plurality of second heat absorbers 320 are provided, the second heat absorbers 320 may be uniformly disposed on the inner surface of the side case 130 to form rows and columns. In the illustrated embodiment, the second heat absorbers 320 are installed in concave surfaces arranged in a grid structure on the inner surface of the side case 130 to form a uniform matrix structure, and accordingly, both side surfaces of all the batteries 200 have an equal contact area with the second heat absorber 320.

When the plurality of batteries 200 are accommodated in the pack case 100 to form a plurality of columns (two columns in the illustrated embodiment) as in the illustrated embodiment, a side plate 140 is disposed between the columns of the battery 200, and the plurality of second heat absorbers 320 are disposed in uniform rows and columns on an inner surface of the side plate 140 to be in contact with inner side surfaces of the batteries 200 (based on the pack case). Accordingly, side surfaces of all the batteries 200 in the battery pack 10 are in uniform contact with the second heat absorbers 320.

Here, referring to FIGS. 1, 3, and 5, a rib structure 150 having a grid shape is formed on the inner surface of the side case 130 and the side plate 140. The structural rigidity of the side case 130 and the side plate 140 is enhanced due to the rib structure 150 connected vertically and horizontally to protrude. In addition, a plurality of concave surfaces 152 forming rows and columns are formed on the inner surface of the side case 130 and the side plate 140 due to the rib structure 150 having a grid shape. The second heat absorber 320 is inserted and disposed in the concave surface 152. The second heat absorber 320 may have a thickness so as to not protrude out of the concave surface 152, and accordingly, the plurality of second heat absorbers 320 may be mounted in the battery pack 10 in a space efficient manner without increasing the size of the pack case 100.

Due to the rib structure 150, the plurality of second heat absorbers 320 are uniformly distributed and disposed in a matrix structure forming rows and columns. When the second heat absorbers 320 are disposed in a distributed manner, the second heat absorber 320 closest to the overheated battery 200 first exerts a heat absorbing function and a fire extinguishing function, and subsequently, as heat is transferred, other second heat absorbers 320 operate. As described above, since the plurality of second heat absorbers 320 are disposed in a distributed manner, it is advantageous to maintain thermal management of the battery pack 10 for a longer time as compared with when one large-capacity heat absorber fractures once to terminate its function once.

For reference, the illustrated battery pack 10 includes a water-cooled heat sink assembly 350, which absorbs heat, on an inner bottom of the main case 110, and the heat sink assembly 350 performs a function of absorbing and cooling heat through the bottom surface of the accommodated battery 200.

### [Second Embodiment]

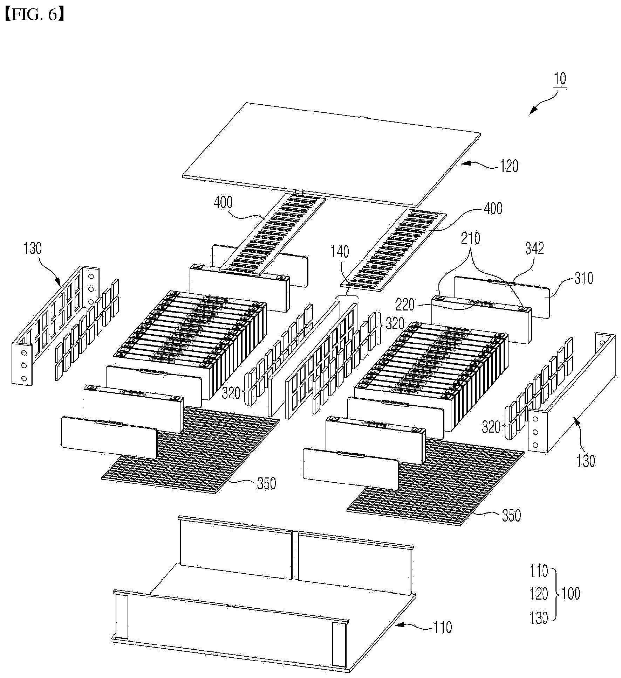

FIG. 6 is an exploded perspective view of a battery pack 10 according to a second embodiment of the present invention. In the battery pack 10 according to the second embodiment of the present invention, a plurality of batteries 200 are accommodated in a pack case 100 to form one or more columns, and a venting guide 400 is provided on upper surfaces of the batteries 200 and integrally coupled to venting devices 220 provided to form a column.

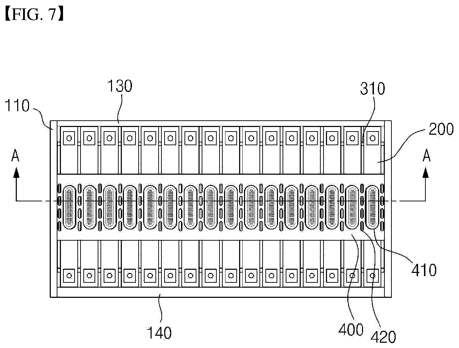

FIG. 7 is a view illustrating a coupling structure of the venting guide 400 for the plurality of batteries 200. As shown in the drawing, the venting guide 400 separates the venting device 220 from positive and negative electrode terminals 210 disposed on an upper surface of the battery 200. That is, one venting guide 400 is mounted in a structure covering the venting devices 220 for the plurality of batteries 200 forming a column, and accordingly, the central venting device 220 covered by the venting guide 400 is separated from the positive and negative electrode terminals 210 disposed at left and right sides of the venting device 220

However, since the venting guide 400 is provided with a gas outlet 410 communicating with the venting device 220, the electrode terminal 210 and the venting device 220 are not completely isolated spatially. Since a discharge path in the venting device 220 is guided upward by the gas outlet 410, damage to the electrode terminal 210 due to thermal runaway can be prevented or at least delayed.

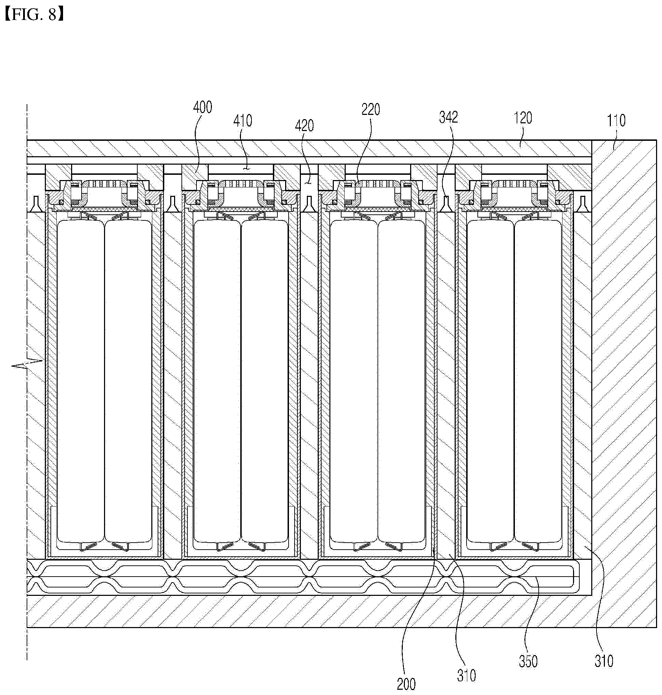

FIG. 8 is a cross-sectional view illustrating the coupling structure along cutting line A-A' of FIG. 7. As described in the first embodiment, an exterior material 340 of a first heat absorber 310 may be a pouch 340. In this case, the first heat absorber 310 may include a fragile portion 342 that preferentially fractures when a liquid impregnated in an absorbent material 330 of the first heat absorber 310 vaporizes and the internal pressure increases.

Also, the fragile portion 342 of the first heat absorber 310 may be positioned in a direction toward the venting guide 400. For example, when the venting device 220 is positioned at the center of an upper surface of the battery 200, the fragile portion 342 of the first heat absorber 310 is also disposed at the center of an upper portion thereof, thereby allowing a steam discharge direction to be directed toward the venting guide 400. Correspondingly, the venting guide 400 is provided with a steam outlet 420 communicating with the fragile portion 342 of the first heat absorber 310. Here, when the first heat absorber 310 is disposed between every adjacent batteries 200 among the plurality of batteries 200, the steam outlet 420 may also be provided between every adjacent outlets 410 among the gas outlets 410.

Referring to FIG. 8, the steam outlet 420 is disposed between every adjacent outlets 410 among the gas outlets 410 communicating with the venting device 220. Therefore, when thermal runaway occurs in any one battery 200 and high-temperature gas or flames are ejected from the venting device 220, a vaporized liquid component of the first heat absorber 310 in contact with the overheated battery 200 fractures the fragile portion 342 to eject steam, and discharge paths of the liquid component and the steam are guided to the gas outlet 410 and the steam outlet 420 of the venting guide 400 so that the liquid component and the steam are smoothly mixed.

As described above, the battery pack 10 of the second embodiment includes the venting guide 400 that guides a discharge path of gas and steam in a set direction. Accordingly, damage to the electrode terminal 210 caused by high-temperature gas and flames is reduced, and a safety function of cooling and extinguishing gas and flames is enhanced.

The present invention has been described above in more detail through the drawings and embodiments. However, the configurations described in the drawings or the embodiments in the specification are merely embodiments of the present invention and do not represent all the technical ideas of the present invention. Thus, it is to be understood that there may be various equivalents and variations that can replace them at the time of filing the present application.

### [Description of reference numerals]

| | | | |
|---|---|---|---|
| 10: | battery pack | 100: | pack case |
| 110: | main case | 120: | upper case |
| 130: | side case | 140: | side plate |
| 150: | rib structure | 152: | concave surface |
| 200: | battery | 210: | electrode terminal |
| 220: | venting device | 310: | first heat absorber |
| 320: | second heat absorber | 330: | absorbent material |
| 340: | exterior material (pouch) | 342: | fragile portion |
| 350: | heat sink assembly | 400: | venting guide |
| 410: | gas outlet | 420: | steam outlet |

## Claims

1. A battery pack comprising:
a pack case;
a plurality of batteries accommodated in the pack case;
a first heat absorber disposed between the plurality of batteries; and
a second heat absorber disposed on each of two side surfaces of each of the plurality of batteries,
wherein the first heat absorber and the second heat absorber each include an absorbent material impregnated with a liquid vaporized by heat generated from the battery, and an exterior material in which the absorbent material in a liquid-absorbed state is accommodated.

2. The battery pack of claim 1, wherein the first heat absorber is disposed between every adjacent batteries among the plurality of batteries.

3. The battery pack of claim 1, wherein the exterior material of each of the first heat absorber and the second heat absorber is a pouch, and
the pouch is provided with a fragile portion that preferentially fractures when the liquid impregnated in the absorbent material vaporizes and an internal pressure thereof increases.

4. The battery pack of claim 3, wherein the absorbent material is a super absorbent matrix.

5. The battery pack of claim 4, wherein the super absorbent matrix includes a super absorbent polymer (SAP) or a super absorbent fiber (SAF).

6. The battery pack of claim 5, wherein the liquid is water mixed with an additive, and
the additive is a material for lowering a surface tension of water or a fire extinguishing agent.

7. The battery pack of claim 3, wherein the battery includes a venting device, and
the fragile portion provided in the pouch of the first heat absorber is disposed at a position corresponding to the venting device.

8. The battery pack of claim 1, wherein the second heat absorber is disposed on an inner surface of a side case of the pack case.

9. The battery pack of claim 8, wherein the second heat absorber is provided as a plurality of second heat absorbers, and
the plurality of second heat absorbers are uniformly disposed on the inner surface of the side case to form rows and columns.

10. The battery pack of claim 1, wherein the plurality of batteries are accommodated in the pack case to form a plurality of columns,
a side plate is disposed between the columns of the batteries, and
the second heat absorber is provided as a plurality of second heat absorbers so that the second heat absorbers are uniformly disposed in contact with side surfaces of the batteries on an inner surface of the side plate to form rows and columns.

11. The battery pack of claim 9 or 10, wherein a rib structure having a grid shape is provided on the inner surface of the side case or the inner surface of the side plate,
the second heat absorbers are disposed in concave surfaces formed to form rows and columns due to the rib structure, and
the second heat absorber does not protrude out of the concave surface.

12. The battery pack of claim 1, wherein the plurality of batteries are accommodated in the pack case to form one or more columns,
a venting device is provided on an upper surface of each battery, and
a venting guide is provided to be integrally coupled to the venting devices of the batteries forming the columns.

13. The battery pack of claim 12, wherein the venting guide separates the venting device from an electrode terminal disposed on the upper surface of the battery.

14. The battery pack of claim 13, wherein the exterior material of the first heat absorber is a pouch, and
the pouch of the first heat absorber is provided with a fragile portion that preferentially fractures when the liquid impregnated in the absorbent material vaporizes and an internal pressure thereof increases.

15. The battery pack of claim 14, wherein the fragile portion of the first heat absorber is positioned in a direction toward the venting guide, and
the venting guide includes gas outlets communicating with the venting devices, and a steam outlet communicating with the fragile portion of the first heat absorber.

16. The battery pack of claim 15, wherein the first heat absorber is disposed between every adjacent batteries among the plurality of batteries, and
the steam outlet is provided between every adjacent outlets among the gas outlets.
